# EUROPEAN PATENT SPECIFICATION

(11) **EP 3 446 949 B1**
(45) Date of publication and mention of the grant of the patent: **08.04.2020**
(21) Application number: 18182488.9
(22) Date of filing: 09.07.2018
(51) Int. Cl.: B62D 21/20, B62D 53/06, B60P 7/13, B62D 21/12

(54) **A MODULAR LOCKING SYSTEM**
MODULARES VERRIEGELUNGSSYSTEM
SYSTÈME DE VERROUILLAGE MODULAIRE

(30) Priority: 25.08.2017 TR 201712821
(43) Date of publication of application: 27.02.2019
(73) Proprietor: Tirsan Treyler Sanayi Ve Ticaret Anonim Sirketi, 54580 Sakarya (TR)
(72) Inventor: DOGU, Cavit Ceyhun, 54580 SAKARYA (TR)
(74) Representative: Yamankaradeniz, Kemal

(56) References cited:
- EP-A1- 3 196 070
- WO-A1-03/011636
- FR-A1- 2 914 242
- US-A- 4 986 705
- US-A1- 2009 278 326

## Description

### Technical Field

This invention is related to a modular locking system for a goose neck box liner vehicle.

In particular, the invention is related to a locking system comprising a rear locking mechanism and a front locking mechanism, which provides modularity to allow the goose neck box liner to be placed in the container in two rows side by side providing a comfortable loading, export and transportation.

### Current Status of the Technique

One of the biggest expense items in overseas exports in the present situation is the logistic costs that are generated when delivering the products to the foreign markets. That is freight costs. In advanced economies, most of the exports are made by container transportation. Container transport is the most widely used inexpensive logistics operation in the top 10 exporting economies in the world today. Containers used in these logistics operations are manufactured according to international ISO 668. In the table below, container dimensions according to ISO 668 norms are listed.

**Table 3 - Minimum internal dimensions and door opening dimensions for series 1 freight containers**

| Dimensions in millimetres | | | | | |
|---|---|---|---|---|---|
| **Freight container designation** | **Minimum internal dimensions** | | | **Minimum door opening dimensions** | |
| | **Height** | **Width** | **Length** | **Height** | **Width** |
| **1AAA** | Nominal container external height minus 241 mm | 2330 | 11 998 | 2 566 | 2 286 |
| **1AA** | | | 11 998 | 2 261 | |
| **1A** | | | 11 998 | 2 134 | |
| **1BBB** | | | 8 931 | 2 566 | |
| **1BB** | | | 8 931 | 2 261 | |
| **1B** | | | 8 931 | 2 134 | |
| **1CC** | | | 5 867 | 2 261 | |
| **1C** | | | 5 867 | 2 134 | |
| **1D** | | | 2 802 | 2 134 | |

The most efficient way of transporting products in containers is possible by designing them in accordance with ISO norms. The dimensions of semi-trailers produced and exported by trailer manufacturers are designed in accordance with the customer demands and technical conditions. This causes unfavorable situations in container shipments and causes the internal dimensions of the containers not to be used as efficiently as it should be.

Leading companies manufacture the goose neck, container lock frames with bolted mounts in order to be able to load the vehicles to be exported into the container in order to gain a higher space in the container internal dimensions. Due to the internal dimensions of the container, the container can only carry one vehicle in the transverse dimension. This increases freight costs.

An American patent document headed "Goose neck trailer Lock" and numbered US2010263413 can be mentioned as an example of Goose Neck Trailer Lock. The present invention is provided by including a body with a goose neck trailer lock and a gateway to the connection and trailer framework by means of a coupe. The lock refers to the general connection mechanism, which locks the body to the trailer.

There is no mention of a modular locking system in the invention consisting of a rear lock mechanism and a front lock mechanism that provides modularity to allow the goose neck box liner to be placed in the container in two rows side by side providing a comfortable loading, export and transportation.

FR 2 914 242 A1, which is considered as the closest prior art, discloses a semi-trailer comprising a box liner constituting the main frame of the trailer, the semi-trailer further comprising: at least one positioning plate positioned on the box liner; at least one positioning plate positioned on the box liner; a rear lock assembly detachably connected to the at least one positioning plate by means of detachable fasteners, and a front lock assembly detachably connected to the at least one positioning plate by means of detachable fasteners.

As a result; the necessity of a modular locking system and the inadequacy of existing solutions have made it necessary to make development investments in the technical field.

### Purpose of the Invention

The current invention is related to a modular locking system which meets the above-mentioned requirements, resolves the possible disadvantages and adds some additional advantages.

The main purpose of the modular locking system regarding the invention is; the goose necked box liner vehicle can be loaded in two rows side-by-side in the container to reduce logistics costs by providing modularity in order for goods to be exported and transported. Loading two carriers in each container allows the logistics costs to be reduced by half. When the front lock and rear lock mechanisms are modular, two trailers can be placed in two rows side by side in a container. When they are placed in two rows, the trailer shall be loaded twice as much containers as before. For this reason, front locks and rear locks which can be easily removed and assembled are manufactured for this invention. As a result, twice as many trailers in a single container reduce the cost of transportation or transportation by half.

In order to achieve the above-mentioned objectives in the most general way, a semi-trailer comprising a box liner constituting the main frame of the trailer and a goose neck box profile constituting the goose neck part of the trailer positioned on the box liner, the semi-trailer further comprising
- at least one chassis positioning plate positioned on the box liner,
- at least one box profile positioning plate positioned on the goose neck box profile,
- a rear locking assembly detachably connected to the at least one chassis positioning plate by means of detachable fasteners, and
- a front lock assembly detachably connected to the at least one box profile positioning plate by means of detachable fasteners.

The structural and characteristic features and all advantages of the invention will be more clearly understood by the following figures and detailed description which are made by referring to these figures, and therefore the evaluation should be done taking these shapes and detailed explanation into consideration.

### Figures to Assist in Understanding the Current Invention

In order to best understand the advantages of the current invention and the additional elements, it should be appreciated that the figures described below are to be understood clearly.
Figure-1 It is an assembled perspective view of the modular locking system of the invention.
Figure-2 The complete perspective view of the modular locking system together with the box liner vehicle.
Figure-3 It is a perspective frontal view of the modular locking system of the invention.
Figure-4 It is a perspective rear view of the modular locking system of the invention.
Figure-5 It is an assembled cross section of the frontal view of the modular locking system of the invention.
Figure-6 It is an assembled cross section of the rear view of the modular locking system of the invention.
Figure-7 The container loaded perspective view of the complete modular locking system together with the box liner vehicle for transportation purposes.

**Piece References**

| | | | |
|---|---|---|---|
| 10 | Modular Locking System | 17 | Frontal lock positioning plate |
| 11 | Complete Box Liner | 18 | Locking cross member |
| 12 | Goose Neck Box Profile | 19 | Frontal lock slider sheet |
| 13 | Chassis positioning plate | 20 | Rear lock assembly |
| 14 | Box profile positioning plate | 21 | Rear lock positioning plate |
| 15 | Chassis lock connection crossover | 22 | Container |
| 16 | Complete frontal lock | 23 | Hole |

### Detailed Description of the Invention

Figure-1 demonstrates an assembled perspective view of the modular locking system of the invention. The complete box liner (11) and the container (22) should have a certain number of measures and container locks produced for transport purposes. The type and length of the complete box liner (11) varies depending on the type of containers to be transported (22) by the vehicles. Some box liners (11) can also transport containers (22) having different sizes according to the design. The box liner (11) constitutes the main frame of the vehicle. A goose Neck Box Profile (12) is positioned on the box liner (11) constituting the goose neck part of the vehicle. Frontal lock assembly (16) and the rear lock assembly (20) are located on the box liner assembly (11). Figure-2 demonstrates an assembled perspective view of the box liner with the modular locking system. In order for the modular locking system (10) to be engaged to the box liner assembly (11), a box profile positioning plate (14) is located on the front and a chassis positioning plate (13) is located at the back.

Figure-3 demonstrates an assembled perspective view of the frontal locking assembly of the complete modular locking system of the invention. The front lock assembly (16) comprises of a frontal lock positioning plate (17), a locking cross member (18) and a frontal lock sliding sheet (19). There is a frontal lock positioning plate (17) positioned on the frontal locking assembly (16). The front lock positioning plate (17) provides the connection and / or mounting of the frontal locking assembly (20) and the box liner (11). There are four holes (23) located on the frontal lock positioning plate (17). The geometrical structure of the frontal lock positioning plate (17) is designed in order to get into the goose neck box profile (12). In this case the front lock positioning plate (17) shall restrict its mobility in the downward and upward direction within the goose neck box profile (12).

Figure-5 demonstrates an assembled cross sectional view of the frontal locking assembly (16) of the complete modular locking system (10) of the invention. Frontal lock positioning plate (17) is engaged with the box profile positioning plate (14), bolt, pin, rivet like detachable fasteners located on the box liner 11), restricting the modular locking system's (10) downward, upward, forward, back, right left mobility and ensures stiffness. Locking cross member (18) has four holes on it which are used to connect the frontal lock assembly (16) to chassis lock connection crossover (15) located on the box liner (11) in the frontal section using bolt, pin, rivet like detachable fasteners in order to ensure endurance against the load of container in case of a sudden brake.

There are four counter boring holes (23) located on the frontal lock slider sheet (19). The frontal lock slider sheet (19) and the chassis lock connection crossover (15) are connected via bolt, pin, rivet like detachable fasteners. Frontal lock slider sheet (19) absorbs the possible impacts on the frontal lock assembly (16) when connecting it with the trailer, while enabling the location of the box liner (11) and the frontal lock assembly (16).

Figure-4 demonstrates a perspective view of the rear locking assembly (20) of the modular locking system (10) related with the invention. The rear lock assembly (20) has locking materials on it. There is a rear lock positioning plate (21) positioned on the rear lock assembly (20) welded from both sides of the vehicle and hence dividing the load evenly on both sides. The rear lock positioning plate (21) has a hole (23) and / or holes (23) on it. Figure-6 demonstrates an assembled cross sectional view of the rear locking assembly (20) of the complete modular locking system (10) related with the invention. The rear lock positioning plate (21) is connected to the rear lock assembly (20) and the chassis positioning plate (13) which is located symmetrically on the box liner (11) via bolt, pin, rivet like detachable fasteners. This connection allows for mounting in a detachable manner. With the method of use of detachable fasteners (bolts, rivets, pins, etc.), the chassis positioning plate (13) and the rear lock positioning plate (21) resist equally strong in the opposite direction of the vehicle, on both sides, against the force that shall be faced in case of a stand on brakes.

Figure-7 demonstrates a perspective view of an assembled box liner (11) with the modular locking system (10) related with the invention loaded in the container (22) for transportation purposes. The letters x, y, z indicate the height, length and width, respectively. The parts of the modular locking system (10) are demountable. By means of this modularity, box liners (11) can be loaded into the container (22) in two rows side by side. Thanks to the modular lock system (10), twice as much as box liners (11) are installed in the containers. (22)

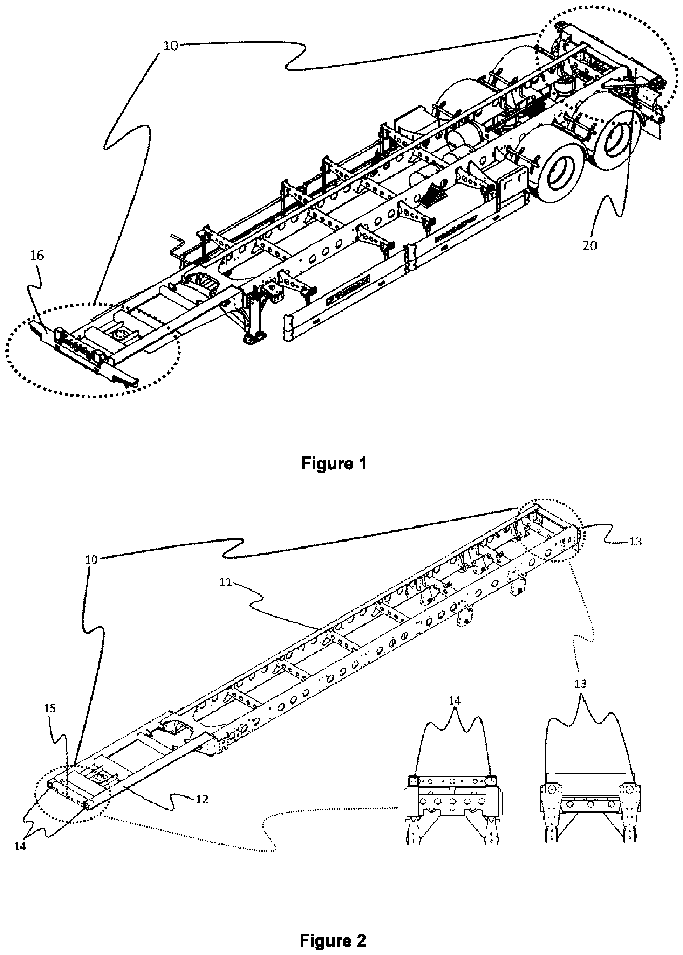

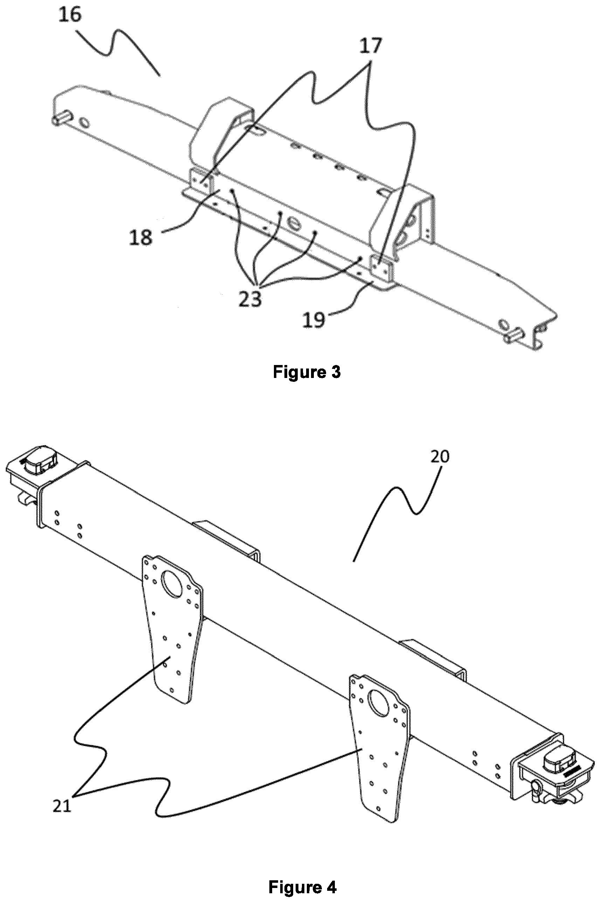

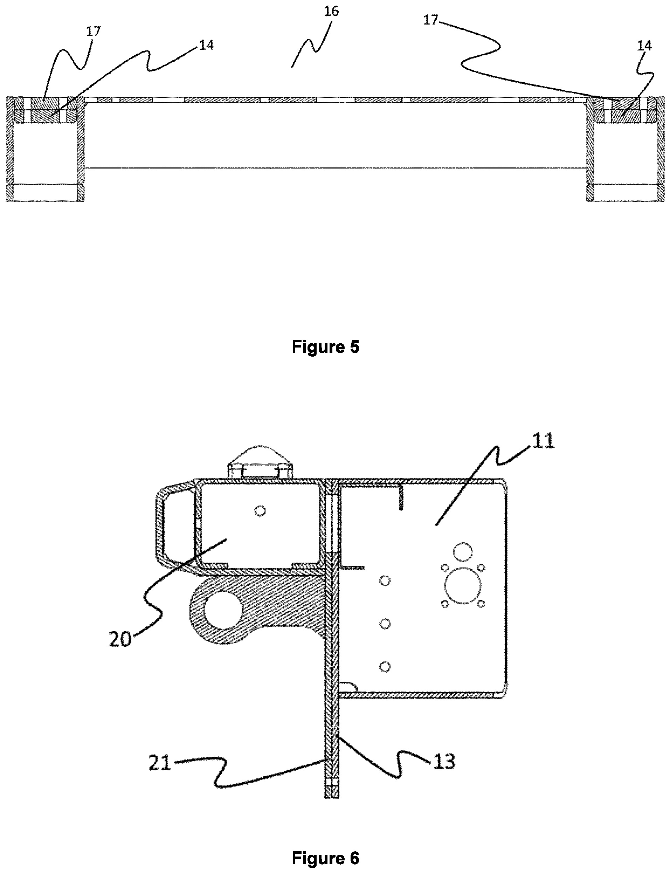

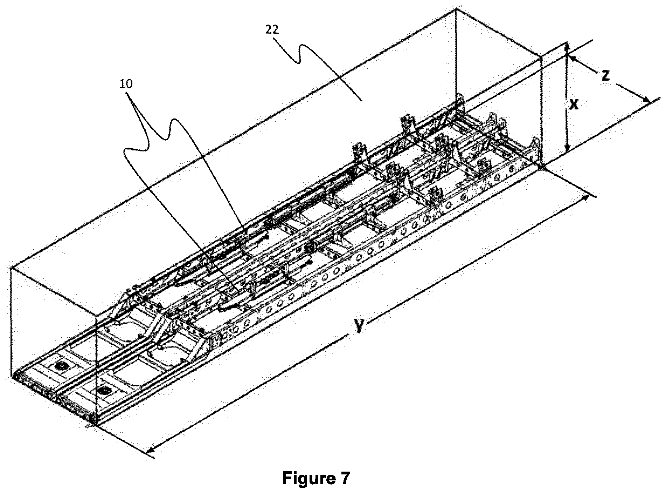

## Claims

1. A semi-trailer comprising a box liner (11) constituting the main frame of the trailer and a goose neck box profile (12) constituting the goose neck part of the trailer positioned on the box liner (11), the semi-trailer further comprising:
- at least one chassis positioning plate (13) positioned on the box liner (11),
- at least one box profile positioning plate (14) positioned on the goose neck box profile (12),
- a rear locking assembly (20) detachably connected to the at least one chassis positioning plate (13) by means of detachable fasteners, and
- a front lock assembly (16) detachably connected to the at least one box profile positioning plate (14) by means of detachable fasteners.

2. The semi-trailer according to claim 1 is **characterized in that** at least one front lock positioning plate (17) located on the front lock assembly (16) connects the front lock assembly (16) with the goose neck box profile (12).

3. The semi-trailer according to claim 1, **characterized in that** the front lock assembly (16) comprises at least one locking cross member (18) which provides resistance against possible weight by the container in case of sudden braking.

4. The semi-trailer according to claim 1, **characterized in that** the goose neck box profile (12) comprises a chassis lock connecting cross member (15) which is connected by means of bolts, pins, or rivet type detachable fasteners to the holes in the locking cross member (18) in order to provide resistance in the vehicle driving direction.

5. The semi-trailer according to claim 1, **characterized in that** the front lock assembly (16) further comprises at least one front lock slider sheet (19) to enable location of the front lock assembly (16) on the goose neck box profile (12).

6. The semi-trailer according to claim 1, **characterized in that** the rear lock assembly (20) comprises at least one rear lock positioning plate (21) which allows the rear frame lock assembly (20) to be connected to the at least one chassis positioning plate (13) positioned on the box liner (11).

## Patentansprüche

1. Sattelanhänger, der einen Box Liner (11) umfasst, der ein Chassis des Anhängers bildet, und ein Gooseneck-Box-Profil (12), das den Gooseneck-Teil des an dem Box Liner (11) positionierten Anhängers bildet, wobei der Sattelanhänger folgendes umfasst:
- mindestens eine Chassis-Positionierungsplatte (13), die an dem Box Liner (11) positioniert ist;
- mindestens eine Box-Profil-Positionierungsplatte (14), die an dem Gooseneck-Box-Profil (12) positioniert ist;
- eine hintere Verriegelungseinheit (20), die durch lösbare Befestigungsmittel lösbar mit der mindestens einen Chassis-Positionierungsplatte (13) verbunden ist; und
- eine vordere Verriegelungseinheit (16), die durch lösbare Befestigungsmittel lösbar mit der mindestens einen Box-Profil-Positionierungsplatte (14) verbunden ist.

2. Sattelanhänger nach Anspruch 1, **dadurch gekennzeichnet, dass** mindestens eine vordere Verriegelungs-Positionierungsplatte (17), die sich an der vorderen Verriegelungseinheit (16) befindet, die vordere Verriegelungseinheit (16) mit dem Gooseneck-Box-Profil (12) verbindet.

3. Sattelanhänger nach Anspruch 1, **dadurch gekennzeichnet, dass** die vordere Verriegelungseinheit (16) mindestens einen Verriegelungs-Querträger (18) umfasst, der im Falle eines plötzlichen Bremsvorgangs dem möglichen Gewicht des Containers Widerstand entgegensetzt.

4. Sattelanhänger nach Anspruch 1, **dadurch gekennzeichnet, dass** das Gooseneck-Box-Profil (12) einen Chassis-Verriegelungs-Verbindungsquerträger (15) umfasst, der über lösbare Befestigungsmittel in Form von Bolzen, Zapfen oder Nieten mit den Löchern in dem Verriegelungs-Querträger (18) verbunden ist, um einen Widerstand in die Fahrtrichtung des Fahrzeugs bereitzustellen.

5. Sattelanhänger nach Anspruch 1, **dadurch gekennzeichnet, dass** die vordere Verriegelungseinheit (16) ferner mindestens eine vordere Verriegelungs-Schieberplatte (19) umfasst, um die Platzierung der vorderen Verriegelungseinheit (16) an dem Gooseneck-Box-Profil (12) zu ermöglichen.

6. Sattelanhänger nach Anspruch 1, **dadurch gekennzeichnet, dass** die hintere Verriegelungseinheit (20) mindestens eine hintere Verriegelungs-Positionierungsplatte (21) umfasst, die eine Verbindung der hinteren Chassis-Verriegelungseinheit (20) mit der mindestens einen Chassis-Positionierungsplatte (13) ermöglicht, die an dem Box Liner (11) positioniert ist.

## Revendications

1. Semi-remorque comprenant un revêtement de caisse (11) constituant le châssis principal de la remorque et un profilé de caisse en col-de-cygne (12) constituant la partie en col-de-cygne de la remorque positionnée sur le revêtement de caisse (11), la semi-remorque comprenant en outre :
- au moins une plaque de positionnement de châssis (13) positionnée sur le revêtement de caisse (11),
- au moins une plaque de positionnement de profilé de caisse (14) positionnée sur le profilé de caisse en col-de-cygne (12),
- un ensemble de verrouillage arrière (20) relié de manière amovible à l'au moins une plaque de positionnement de châssis (13) au moyen de fixations amovibles, et
- un ensemble de verrouillage avant (16) relié de manière amovible à l'au moins une plaque de positionnement de profilé de caisse (14) au moyen de fixations amovibles.

2. Semi-remorque selon la revendication 1, **caractérisée en ce qu'**au moins une plaque de positionnement de verrouillage avant (17) située sur l'ensemble de verrouillage avant (16) relie l'ensemble de verrouillage avant (16) au profilé de caisse en col-de-cygne (12).

3. Semi-remorque selon la revendication 1, **caractérisée en ce que** l'ensemble de verrouillage avant (16) comprend au moins une traverse de verrouillage (18) qui fournit une résistance contre un poids éventuel par le conteneur en cas de freinage brusque.

4. Semi-remorque selon la revendication 1, **caractérisée en ce que** le profilé de caisse en col-de-cygne (12) comprend une traverse de liaison de verrouillage de châssis (15) qui est reliée au moyen de boulons, de goupilles ou de fixations amovibles du type rivet aux trous dans la traverse de verrouillage (18) afin de fournir une résistance dans la direction de conduite du véhicule.

5. Semi-remorque selon la revendication 1, **caractérisée en ce que** l'ensemble de verrouillage avant (16) comprend en outre au moins une feuille de glissière de verrouillage avant (19) pour permettre le positionnement de l'ensemble de verrouillage avant (16) sur le profilé de caisse en col-de-cygne (12).

6. Semi-remorque selon la revendication 1, **caractérisée en ce que** l'ensemble de verrouillage arrière (20) comprend au moins une plaque de positionnement de verrouillage arrière (21) qui permet à l'ensemble de verrouillage arrière (20) d'être relié à l'au moins une plaque de positionnement de châssis (13) positionnée sur le revêtement de caisse (11).
